# EUROPEAN PATENT SPECIFICATION

(11) **EP 2 532 760 B1**
(45) Date of publication and mention of the grant of the patent: **25.03.2020**
(21) Application number: 11168798.4
(22) Date of filing: 06.06.2011
(51) Int. Cl.: C22B 3/02, C22B 3/24, C22B 3/42, C02F 1/42, B01D 15/20, B01J 47/022, B01J 47/026, C25D 21/22, C22B 3/00, C23C 18/16, B01J 39/07, B01J 49/06, B01J 49/53, C25D 5/12, C23C 18/32, C23C 18/36, C02F 103/16, C02F 101/20

(54) **Device and method for recovering nickel from a nickel plating bath fluid**
Vorrichtung und Verfahren zur Rückgewinnung von Nickel aus einer Nickelplattierungsflüssigkeit
Dispositif et procédé de récupération du nickel à partir d'un fluide provenant d'un bain de nickelage

(43) Date of publication of application: 12.12.2012
(73) Proprietor: Atotech Deutschland GmbH, 10553 Berlin (DE)
(72) Inventor: Heydecke, Jens, 14513 Teltow (DE); Kühne, Sebastian, 10715 Berlin (DE)
(74) Representative: Patentanwälte Bressel und Partner mbB

(56) References cited:
- EP-A1- 0 475 289
- EP-B1- 1 532 295
- WO-A1-88/02738
- US-A- 5 458 024
- US-A1- 2004 055 958
- DATABASE WPI Week 200820 Thomson Scientific, London, GB; AN 2008-C64808 XP002664230, -& CN 101 007 220 A (UNIV NANJING) 1 August 2007 (2007-08-01)
- A.S. Rathore, A. Velayudhan: "Scale-Up and Optimisation in Preparative Chromatography", 2003, Marcel Dekker Inc, USA ISBN: 0-8247-0826-1

## Description

The present invention relates to a method for recovering nickel ions from a nickel electroplating bath or an electroless nickel plating bath or a nickel rinse water containing the nickel ions.

Such methods are highly desirable, because metal plating baths, particularly electroless metal plating baths, are rapidly exhausted after short usage times. This is because consumption of the main components of such baths, such as metal ions to be deposited and of a reducing agent used to deposit metal, takes place and because products of the metal deposition reaction, namely oxidation of the reducing agent used, are accumulated in the bath. In order to compensate for consumption of the metal ions, reducing agent and other components of electroless metal plating baths, the respective components are replenished at need. In order to have the accumulation of products of the metal reduction reaction be compensated, further maintenance procedures must be set up and performed, such as electrodialysis.

Such type electrodialysis process is for example described in EP 1 532 295 B1. The device for regenerating an electroless metal plating bath described therein, more particularly an electroless nickel plating bath containing hypophosphite as a reducing agent, comprises electrodialysis arrangements which each has diluate compartments for holding the metal plating bath, concentrate compartments that are separated from the diluate compartments through ion exchange membranes and which hold a concentrate fluid serving to absorb interfering substances that are to be removed from the metal plating bath as well as anodes and cathodes. The electrodialysis arrangements provide for removing orthophosphite, sulfate and sodium ion species as well as small amounts of nickel and hypophosphite ions to be loaded into the concentrate fluid from the spent electroless nickel plating bath. The device further comprises main cation exchangers for removing nickel ions from the concentrate fluid, wherein said cation exchangers are coupled to the concentrate compartments in such a manner that the concentrate fluid is allowed to be conducted through the main cation exchangers and to be recirculated back into the concentrate compartments. Regenerant is passed through the cation exchangers for regenerating them after they are loaded with the metal ions of the concentrate fluid.

CN 101 007 220 A describes an ionic exchange or adsorption resin column comprising a plurality of inner tubes in a cylinder which inner tubes are filled with the resin. The ratio of the height to the diameter of the inner tubes is 10 to 15. Liquid is flown from a lower water cap being equipped with a liquid inlet, then through the inner tubes and further through an upper water cap equipped with a liquid outlet. US2004055958 discloses a method for removing heavy metal cations, selected from the group consisting of lead, cobalt, copper, nickel and a combination thereof, from waste water comprising: receiving a waste water containing a heavy metal cation into a natural zeolite column; and removing the heavy metal cation within a mass transfer zone of the natural zeolite column, wherein the mass transfer zone has a distance that is sized based on a hydraulic loading of the waste water.

It has been found out that recovery of the metal ion species from the cation exchangers is not efficient because concentration of the nickel ions achievable in the regenerant fluid is relatively low. As a consequence, further operations will be necessary to reuse such solutions in an electroless plating operation, which will require the components contained therein to be rendered more concentrated.

Therefore, a main object of the present invention is to provide a method for recovering a recovering material, namely nickel ions, from an exhausted fluid, namely from a nickel electroplating bath or from an electroless nickel plating bath or from a nickel rinse water containing the nickel ions. The method shall allow this recovering material to be used for replenishment of a process fluid with the recovering material, in particular without the need for any further operation to be performed on this process fluid and recovering material to be suited for replenishment. More especially, an improved ion exchange process shall be provided which yields high regenerant fluid quality (low acid excess and substantially free of organic material) and high efficiency in the regeneration of the ion exchange material, wherein such high quality is to be defined as a concentration of the recovering material in the regenerant fluid to be as high as possible for its efficient recovery. Accordingly, no further refining operations shall be required for its reuse. Furthermore, the invention shall also provide a device and method of purifying used process fluids. Thus, the invention shall provide an economically and ecologically advantageous method.

These objects are achieved by the method of the invention as defined in the claims. Preferred embodiments of the invention are defined in the sub-claims.

More particularly, the device for performing the method of the invention serves for recovering a recovering material, namely nickel ions, from a recovering fluid, namely a nickel electroplating bath or an electroless nickel plating bath or a nickel rinse water, which contains the recovering material. The device comprises at least one container. The at least one container comprises at least one sorption material, namely a cation exchange material. The at least one sorption material forms at least one sorption bed in the at least one container, i.e., preferably one sorption bed in each container. The at least one sorption bed allows the recovering fluid to flow there through. The sorption bed contained in the container has a sorption bed height and a sorption bed width (with the sorption bed in the contracted state to be taken as a basis). According to one most preferred aspect of the invention the aspect ratio of the sorption bed width to the sorption bed height is at most 1:10, more preferably at most 1:20, even more preferably at most 1:40 and most preferably at most 1:75. Furthermore this aspect ratio is preferably selected to be at least 1:200, more preferably at least 1:150 and most preferably at least 1:100. These values can be combined independently from each other. The sorption bed width and sorption bed height may easily be defined with the sorption bed having a defined shape. As the sorption bed being contained in the container attains the shape of the container, the aspect ratio of the sorption bed width to the sorption bed height is given by the shape of the interior space of the container. If the container is a column having a cylindrical interior space for example with the sorption bed filling up this column, the sorption bed width is given by the diameter of the column interior space and the sorption bed height is given by the axial length of the sorption bed in the column. If a non cylindrical form is selected, the equivalent diameter is calculated by multiplying 4 with the cross section area A and the result being divided by the perimeter U of the column interior: (diameter = 4·A/U). If the container is a rotating drum for example, with the sorption bed forming a cylindrical layer on the interior wall thereof (see embodiment described below), the sorption bed height equivalent is the thickness of the cylindrical layer formed at the container wall due to the centripetal force and the sorption bed width equivalent is the length of the generatrix of this cylindrical layer.

More particularly, the method of the invention serves for recovering nickel ions from the nickel electroplating bath or electroless nickel plating bath or nickel rinse water which contains the nickel ions. The method comprises a first method step a) of loading the nickel ions to at least one sorption material, namely at least one cation exchange material, the sorption material forming at least one sorption bed, which has a sorption bed volume and which is comprised in at least one container, by bringing the nickel electroplating bath or electroless nickel plating bath or nickel rinse water containing the nickel ions into contact with the at least one cation exchange material (loading step); and a second method step b) of unloading the nickel ions from the at least one cation exchange material, to yield nickel regenerate fractions leaving the sorption bed and having a pH > 1, by bringing an acid as a regenerant fluid into contact with the at least one cation exchange material which is loaded with the nickel ions and loading the nickel ions to the acid, wherein the acid is passed through the at least one sorption bed in the regenerating step in a regenerating direction, wherein the regenerating direction is a downward direction (regenerating step); and a further method step c) of selecting the aspect ratio of the sorption bed width to the sorption bed height to be at most 1:10; wherein further the nickel electroplating bath or electroless nickel plating bath or nickel rinse water is passed through the at least one sorption bed in the loading step in a loading direction and the loading and regenerating directions are opposite to each other; wherein further the nickel electroplating bath or electroless nickel plating bath or nickel rinse water is passed through the at least one sorption bed in the loading step at a loading mass flow rate, wherein further the acid is passed through the at least one sorption bed in the regenerating step at a regenerating mass flow rate and wherein the loading mass flow rate is larger than the regenerating mass flow rate; and wherein the loading mass flow rate is equal to or lower than 10 sorption bed volumes per hour.

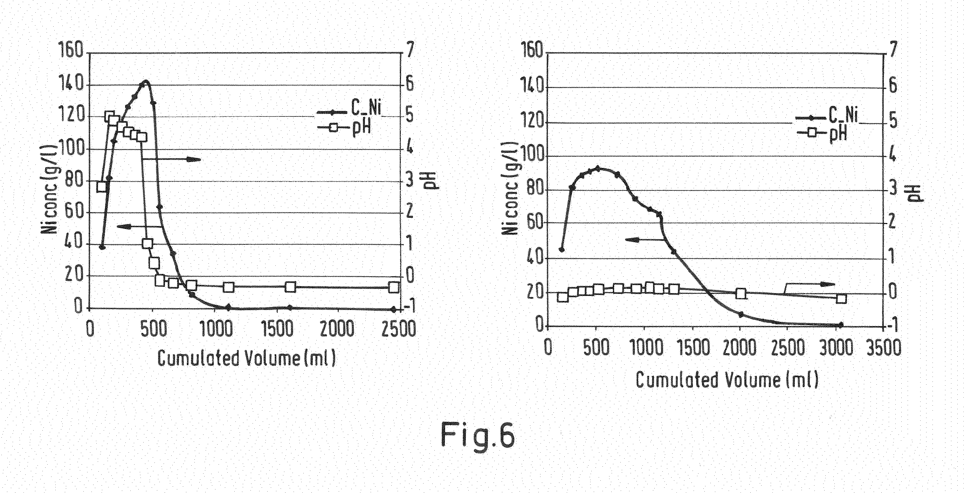

Prior art methods suffer from a low efficiency of separation of the recovering material when it is unloaded from the sorption material. This has been found to be due to a low aspect ratio of the sorption bed width to the sorption bed height being used. Prior art methods use a low aspect ratio, which is as low as 1:1 or 1:2 for example. It has turned out that such low aspect ratio does not result in good separation and hence yields only low concentration of the recovering material in the fluid used to unload the recovering material from the sorption material (regenerant fluid), whereas separation is good when the aspect ratio is high (see Paragraph 2 and Fig. 6 for this favorable effect). Therefore, increasing the aspect ratio has been found to considerably enhance efficiency of separation of the recovering material.

Providing a low aspect ratio of the sorption bed obviously results in backmixing of the fluid traversing the sorption bed, which is believed to considerably take place because the flow of fluid through the sorption bed seems to be directed much less systematically downstream in such case than in a sorption bed having a high aspect ratio. In low aspect ratio sorption beds the fluid flow may additionally comprise radial flow components leading to backmixing. A sorption bed having a high aspect ratio will promote forming a fluid flow through the sorption bed in the shape of a piston (plug flow). In fact, a low aspect ratio sorption bed would cause the fluid volume elements mixing up with adjacent fluid volume elements while passing through the container so that a sharp boundary between those fluid volume elements having a first composition of the recovering material and adjacent fluid volume elements having a second composition which is different to the first composition is prevented from forming and dilution of the recovering material in the fluid will result as a consequence thereof. Such different compositions are generated in the container when the regenerant fluid passes through the at least one sorption bed being in a loaded state, for example, wherein part of the fluid volume elements have already been loaded with the recovering material from the sorption material and part of the fluid volume elements are still unloaded. A sharp boundary forming between these parts is essential (separation effect) because mixing between adjacent volume elements in the container would homogenize concentration of the recovering material in the volume elements, thus would decrease concentration thereof and, as a consequence thereof, would decrease efficiency of recovery and increase the residual concentration of regenerant solution. Therefore, the at least one sorption bed is, according to the present invention, selected to have a high aspect ratio in order to achieve maximum concentration of the recovering material in the regenerant fluid.

Therefore, by providing the method of the invention, concentration of the recovering material in a regenerant fluid being loaded from the at least one sorption material is optimized so that easy further use or further processing of the regenerant fluid is made possible. No further refining of the regenerant fluid is required or at least only minor refining will be necessary. The invention accordingly offers enormous economical and ecological advantages because efficiency of the recovery is strongly improved by improving the quality of the regenerant fluid. This is because the concentration of the recovering material in the regenerant fluid is increased and the amount of regenerant fluid required to recover the recovering material is hence decreased.

Different to the previous aspect of the invention, according to an alternative aspect of the invention, the aspect ratio of the sorption bed width to the sorption bed height may be selected at any value, i.e., at a value which is lower than 1:10 or which is 1:10 or which is higher than 1:10. Therefore, the subject-matter of the present invention according to this aspect is a method using a device for recovering nickel ions from a nickel electroplating bath or electroless nickel plating bath or nickel rinse water containing the nickel ions, wherein the device comprises at least one container, wherein the at least one container comprises at least one cation exchange material, wherein the at least one cation exchange material forms at least one sorption bed in the at least one container and wherein the at least one sorption bed allows the nickel electroplating bath or electroless nickel plating bath or nickel rinse water to flow there through. Accordingly, the method of the invention of recovering the nickel ions from the nickel electroplating bath or electroless nickel plating bath or nickel rinse water containing the nickel ions according to this aspect comprises: a) loading the nickel ions, in a loading step, to the at least one cation exchange material forming the at least one sorption bed which has a sorption bed volume and which is comprised in the at least one container by bringing the nickel electroplating bath or electroless nickel plating bath or nickel rinse water containing the nickel ions into contact with the at least one cation exchange material; and b) unloading the nickel ions, in a regenerating step, from the at least one cation exchange material, to yield nickel regenerate fractions leaving the sorption bed and having a pH > 1, by bringing an acid as a regenerant fluid into contact with the at least one cation exchange material which is loaded with the nickel ions and loading the nickel ions to the acid, wherein the acid is passed through the at least one sorption bed in the regenerating step in a regenerating direction, wherein the regenerating direction is a downward direction; wherein the nickel electroplating bath or electroless nickel plating bath or nickel rinse water is passed through the at least one sorption bed in the loading step in a loading direction and the loading and regenerating directions are opposite to each other; and wherein the nickel electroplating bath or electroless nickel plating bath or nickel rinse water is passed through the at least one sorption bed in the loading step at a loading mass flow rate, wherein further the acid is passed through the at least one sorption bed in the regenerating step at a regenerating mass flow rate and wherein the loading mass flow rate is larger than the regenerating mass flow rate, and wherein the loading mass flow rate is equal to or lower than 10 sorption bed volumes per hour. Accordingly, all subsequent embodiments described herein below refer to these two aspects of the invention, i.e., a first aspect wherein the aspect ratio as defined herein above is at most 1:10 and a second aspect wherein the aspect ratio is set at any value.

The method of the invention and device for performing the method of the invention are used for recovering nickel ion species from a nickel ion containing liquid. This nickel ion containing liquid is a nickel electroplating bath or an electroless nickel plating bath or a nickel rinse water containing the nickel ions.
The electroless nickel plating bath may contain hypophosphite ion species as a reducing agent, for example.

At least one sorption material may comprise a strong acid cation exchange material. Furthermore, it is highly preferred that the at least one sorption material comprises a monodisperse sorption material, i.e., such material is comprised from sorption material particles which all have substantially the same size (the sorption material particles having a narrow particle size distribution).

In a preferred embodiment of the invention the at least one container further comprises at least one means for fixing the at least one sorption bed to compensate for a volume change thereof. For this purpose, it is preferred that the interior space of the at least one container is designed to be variable to be flexibly accommodated to the sorption bed, irrespective of any volume change the sorption bed is subjected to.

According to this preferred embodiment of the invention, the method of the invention additionally comprises the method step of fixing the at least one sorption bed to compensate for a volume change thereof (fixing step).

Low efficiency in recovering the recovering material may also be due to a volume change of the sorption bed occurring when the sorption material is loaded with the recovering material and when the recovering material is unloaded using the regenerant fluid and a so-called freeboard being formed in the at least one container as a consequence thereof. Ion exchange material changes in volume when it is loaded with the recovering material or when the recovering material is unloaded from the ion exchange material. For example, weak acid cation exchange material expands by for example 60 to 80 % in volume when it is loaded with the recovering material and strong acid cation exchange material and strong base anion exchange material expand when they are unloaded to release the recovering material and vice versa. Expansion of the weak acid cation exchange material is particularly large compared to strong ion exchange material. This volume change would normally require the freeboard to be available in the at least one container while the container would be designed to still fully accommodate the sorption bed in the maximum expanded state while the freeboard is available when the sorption bed is in its contracted state. The freeboard is that volume difference in the container which is available to the sorption bed between its maximum and its minimum volume and which is left free to it in the container as an expansion volume into which it can freely expand.

By fixing the at least one sorption bed in a fixing step according to the present invention a volume change thereof is compensated for. Fixing of the at least one sorption bed causes the sorption bed to be permanently retained in a packed state and to be compacted permanently, i.e., no freeboard being available to the bed so that it is confined in its packed state and cannot freely move inside the container. This condition will be achieved by allowing the container to be flexibly adapted in size to the actual volume of the sorption bed. Thus, the volume in the container available to the sorption bed will always precisely match the volume of the sorption bed.

The at least one sorption bed will accordingly be locked in the at least one container in position. Even a large upward volume flow rate would therefore not be able to displace the sorption bed upwardly and possibly will not cause the sorption material particles to swirl thereby interfering with the fluid passing there through.

Compacting and fixing of the at least one sorption bed in this preferred embodiment of the invention will therefore prevent or at least minimize any free space adjacent to and/or inside the sorption bed from coming into existence. Such free space would be detrimental to the flow of any fluid traversing the at least one container.

The freeboard is especially disadvantageous in the regenerating operation if it forms on the outlet side of the sorption bed. Preventing any voids in the container, in particular on the outlet side of the sorption bed, will additionally yield a more even flow of the fluid through the sorption bed. In particular, voids occurring downstream from the sorption bed are disadvantageous because they lead to backmixing of the fluid leaving the container and hence to dilution of the recovering material contained therein. Most problematic are voids which are downstream of the sorption bed for the regenerant fluid used in the regenerating step, because it is highly desired to generate a concentration of the recovering material in the regenerant fluid as high as possible. Likewise, voids being formed within the sorption bed are undesirable.

As regenerating the sorption material in the case of metal recovery involves using acid as a regenerant fluid for discharging metal ions from the loaded sorption material to the regenerant fluid, efficiency of the regenerating step is further defined in terms of the concentration of acid (pH value) contained in the effluent leaving the sorption material during the regenerating step. By using the present invention, compacting and fixing the at least one sorption bed minimizes the concentration of acid contained in the effluent because there are no voids present in and/or adjacent to the sorption bed which would cause the acid to smear over a large amount of volume elements of the regenerant fluid. Therefore, during the discharge of the metal ion species from the sorption material to the regenerant fluid only a small amount of acid is left in this fluid when it leaves the sorption bed. This amount is in best case determined by the equilibrium conditions between sorption material and acid. Therefore, the effluent further almost exclusively contains the metal ion species and, therefore, it hardly contains any further components like a large amount of acid. This makes direct reuse of the effluent in a metal plating bath or for any other purpose possible.

In a preferred embodiment of the present invention the at least one container further comprises at least one first fluid port allowing the regenerant fluid to enter into the at least one container and at least one second fluid port allowing the regenerant fluid to leave the at least one container. Due to the fixing means of the at least one container the at least one first and second fluid ports are comprised by the at least one container to be, irrespective of the volume change of the at least one sorption bed, in permanent direct contact with the at least one sorption bed. This is achieved by preventing or least minimizing any voids in and/or adjacent to the at least one sorption bed from forming so that the at least one sorption material always completely fills up the at least one container.

Compacting and fixing of the at least one sorption bed may be achieved variously: In a first preferred variation of compacting and fixing the at least one sorption bed, at least one fixing means comprises a means for locking at least one sorption bed in position in at least one container, wherein the locking means are mounted free to move in the at least one container, thereby permanently compacting and fixing the sorption bed. If the container comprises a column, the means for locking is preferably mounted in the column to freely move in an axial direction of the column.

In this variation of compacting and fixing the at least one sorption bed, the locking means may, in a first preferred embodiment of this first variation, comprise a gravity weight means loading by gravity the sorption bed in the at least one container. This gravity weight is freely movable inside the container so that it may move up and down as the volume of the sorption bed changes. The sorption bed may be placed on a plate provided in the container which is permeable to the fluid so that the fluid may pass there through whereas the sorption material is held by this plate. The gravity weight means may be placed onto the sorption bed, possibly separated from the same by an inert packed bed or by an inert body which is permeable to the fluid, and may compress the sorption bed by gravity. The gravity weight means preferably has a cross section allowing it to be almost in contact with the wall of the container and leaving only a narrow space, preferably a gap, between it and the wall thereof to allow fluid passing there through. For this purpose the gravity weight means has a shape and size to fit into the container interior, the interior of a column for example, so that it has substantially no freedom to move radially in the column but may move in an axial direction therein. To this end, its outer surface may have a shape which is the same as the shape of the inner wall of the column or the outer surface of the gravity weight means abuts to the inner wall via part of its outer surface. The gap between the gravity weight means and the interior container wall shall be small enough to prevent the sorption material particles from entering therein (the size of the gap shall be smaller than the smallest intact particles), thus preventing the gravity weight means from subsiding into the sorption bed, and large enough to prevent the gravity weight means from tilting in the container. At least one container may be a column, a cylindrical column for example. In this case the gravity weight may slide up and down along the long axis of the column.

In a second preferred embodiment of this first variation a piston can be used instead of the gravity weight means, wherein this piston is not forced to be pressed onto the sorption bed due to its own weight but by an external force such as an elastic force like a spring force or a force generated by a pressure reservoir, a gas or liquid reservoir being pressurized for example (causing hydraulic or pneumatic biasing), or a throw force, for example generated by mechanical means which are driven by an actor, a motor for example. The piston can, like the gravity weight means of the first preferred embodiment, be sized such that it almost exactly fits into the container so that there is a small space between the piston and the wall of the container only to allow fluid passing there through. The container may also be a column. Depending on the volume change of the sorption material the piston is movable in the container and may move up and down.

In a third preferred embodiment of this first variation the means for locking the sorption bed in position may be an upper container part which fits to a lower container part such that the volume encased therein is variable. The sorption bed completely fills up the interior space of the variable container, so that, upon a volume change thereof, the interior space is changed likewise. The two container parts may preferably be biased against each other to force them together. An external biasing force like a spring, hydraulic and/or pneumatic force, biases the two parts together and acts against the force exerted by the sorption bed as its volume increases. Therefore, the interior space of the container always corresponds to the sorption bed volume. As the size of the interior space of the container permanently adapts to the sorption bed volume, no void in and/or adjacent to the sorption bed will be generated. An inlet fluid port is preferably provided on one of these parts and an outlet fluid port is provided on the other one of these parts. The two parts may advantageously be connected together ensuring leak tightness so that fluid cannot escape the container. For providing leak tightness to the container sliding gasket seals between the column walls may be provided. In a preferred example of this embodiment a telescopic column comprising a lower column part and an upper column part forms a variable interior space volume to accommodate the sorption bed. One of these column parts slides in the other one.

The compacting and fixing efficiency of the locking means described herein before may be further optimized if the container is continuously mechanically activated, for example from the outer side thereof by hitting the wall of the container for example or by exerting a vibration action to the container. This mechanical activation will induce easier compaction and fixation of the sorption bed and thus assists the locking means action. This assistance is mainly effective in the case of the gravity weight means.

All these preferred embodiments prevent or at least minimize any void in and/or adjacent to the sorption bed in the container so that a very uniform flow of fluid through the sorption bed is achieved. The gravity weight means or piston or even other movable locking means forms the upper boundary of the sorption bed and in this manner delimits the interior space of the container. Of course, the gravity weight means, piston and telescopic column principles or only two of them may be realized in the same embodiment, by providing a gravity weight being biased by an external pressure force for example.

In order to achieve as small and/or as few voids as possible beyond the movable gravity weight means or piston or other locking means, the fluid port, allowing the fluid (particularly the regenerant fluid) to leave the sorption bed, may be located directly at the gravity weight means or piston or other upper means locking the sorption bed in position, preferably at its bottom or at its top side. The fluid port accordingly moves together with the locking means as the volume of the sorption bed changes. For example, the locking means may comprise at least one central through hole allowing the fluid to pass there through and out of the container, preferably through a tube or hose or other conduct means. This conduct means may be flexible to adjust to the instantaneous position of the locking means depending on the volume of the sorption bed.

Alternatively, a conduct means such as a tube or hose may be provided which is fixedly immerged into the sorption bed so that the fluid passing through the sorption bed leaves same at a given location which is given by the location of the port leading into this conduct means. This given location of this port is always inside the sorption bed or right above the lowest level of the upper boundary of the sorption bed, even when the sorption bed has its minimum volume. Thus, the fluid is always allowed to leave the sorption bed after having passed a defined volume thereof. The conduct means may for example pass through the movable locking means wherein the locking means slides along this conduct means as the volume of the sorption bed changes.

In a further alternative, a fluid port allowing the fluid to leave the container may be provided at a given location at and/or in the container, preferably in the container wall, such that the fluid leaves the sorption bed after having passed a given distance within the sorption bed. Again, this defined location shall be located at a given location beneath the upper boundary of the sorption bed when the sorption bed has attained a minimum volume.

These two above alternatives leave part of the sorption bed unused if the volume of the sorption bed is not minimum, because the fluid enters or leaves it without coming into contact with the uppermost portion thereof which is provided between the upper boundary thereof and the fluid port. Instead of pure adsorption material the bed can consist of the sorption material and an upper bed consisting of inert material. The filling height of sorption material may be selected in this case in order to end up with the upper boundary of the adsorbant material of the sorption bed right below the inert bed part. By doing this unwanted and uncontrolled drag in of material released from the sorption material that will not or just partly be in contact with the fluid above the conduct will be avoided.

In a second preferred variation of compacting and fixing the at least one sorption bed, at least one fixing means comprises an elastic packing element which displaces part of the at least one sorption bed, thereby permanently compacting and fixing the sorption bed. The packing elements of this second variation are sealed spaces located in the sorption bed or directly adjacent thereof. The sealed spaces may be balls, bubbles or other cavities which are encased by an elastic membrane, such as rubber balls or other displacement bodies. The container containing the sorption bed and the elastic packing elements has a fixed volume, the sorption bed and packing elements completely filling the container such that no void is present therein. The elastic packing elements are compressed or expanded by the volume expansion or contraction of the sorption bed, respectively. The elastic packing elements prevent any void in and/or adjacent to the sorption bed from forming, so that the sorption bed is permanently compacted and fixed in the container.

In a first preferred embodiment of this second variation, the elastic packing elements are completely sealed and are compressed or expanded due to a pressure equilibrium between the pressure exerted by the sorption bed upon the volume expansion or contraction thereof, respectively, and the internal pressure of the elastic packing elements: When the volume of the sorption bed increases the sorption material compresses the elastic packing elements against their inner pressure, and when the volume of the sorption bed decreases the sorption material allows the packing elements to expand due to their internal pressure. The sealed spaces may be mixed with the sorption material more or less uniformly or they may be placed at predetermined locations in the sorption bed: If a plurality of such sealed spaces are provided these sealed spaces may be located at definite locations in the sorption bed, for example spaced at regular distances from each other in order to uniformly squeeze the sorption bed throughout it once it changes its volume. The position of the elastic elements can be fixed along the height and diameter of the container in order to achieve a homogeneous distribution therein and can thereby avoid separation of elastic elements and sorption material.

In a second preferred embodiment of this second variation, at least one elastic packing element is provided in each container and connected to an external reservoir, a gas or liquid pressure reservoir for example, which is able to expand the elastic packing element(s) or allow same to be compressed by the sorption material depending on the volume change thereof. By monitoring the pressure in the external reservoir the sorption bed can permanently be held subject to a given pressure.

The material of the elastic packing elements may preferably be selected to be suitable to withstand the pressure and any chemical action which it is subject to. It may for example be made of a fluorpolymer, such as FPM (fluoroelastomer), or silicon material, possibly reinforced by a reinforcing material like a mesh.

In a third preferred variation of compacting and fixing the at least one sorption bed, at least one compacting and fixing means comprises a flexible material which forms at least part of the container, at least one wall, such as a side wall, of at least one container for example, thereby permanently compacting and fixing the sorption bed. The flexible material may be any material which is suitable to withstand the pressure and any chemical action which it is subject to. It may for example be made of a fluorpolymer, such as FPM (fluoroelastomer), or silicon material, possibly reinforced by a reinforcing material like a mesh. FPM is preferred because it exhibits outstanding properties (excellent chemical resistance, excellent elasticity). The flexible material is subject to an external restoring force so that the sorption bed being formed in the interior space of the container always voidlessly fills same up. The external restoring force may be the external atmospheric pressure but can also be an external elastic force, such as a spring force or a hydraulic or pneumatic force. In an alternative, the container may for example be placed in an external vessel containing a hydraulic fluid which exerts the restoring force to the container uniformly against all sides thereof.

In a first preferred embodiment of this third variation of the invention the container comprises a bellows which accommodates the sorption bed and which is variable in length so that its interior space volume is variable. As the bellows has a variable interior volume the sorption bed provided in the bellows preferably completely fills the bellows without leaving any void, irrespective of any change of the volume of the sorption bed. As the volume of the sorption bed varies, the interior volume of the bellows varies likewise. The external force is preferably exerted to the front end faces of the bellows. Fluid may be passed from any of the front end faces of the bellows to the sorption bed therein and may leave it at the opposite front end face.

In a second preferred embodiment of this third variation of the invention at least part of the walls of the container are made from a flexible material. This flexible material may be warped under the internal force of the sorption bed and/or under the external force while being expanded to provide a variable interior space volume of the container. The flexible material may for example be a flexible membrane made of FPM or silicone. The membrane preferably forms one of the walls, preferably side walls, of the container. An external force acts on this membrane. This external force may be exerted by means of a pressing plate for example. In an alternative to this second preferred embodiment the container may completely be made from the flexible material such that it expands when the sorption bed expands and is compressed when the sorption bed volume reduces. The container may for example be a flexible tube, preferably made of FPM or silicone. In both cases the fluid may enter the container through any one of its front end faces and leave it through the other front end face.

In an alternative of this preferred second embodiment the container comprises segments being formed from a elastic wall material, these segments being separated from each other by rigid wall segments which connect the elastic wall segments to each other. The rigid and elastic wall segments preferably alternate in an axial direction of the container. This further alternative enables uniformity of contraction of the sorption bed without allowing any void from forming therein.

In a further alternative of this preferred embodiment of this third variation at least part of the walls of the container are made from the flexible material but these walls are not allowed to expand but simply to bend. Accordingly, due to a compressive action of the sorption bed the flexible container is squeezed. This allows the flexible material to be subject to less wear and therefore will withstand longer use periods. A maximum interior volume of the container is achieved when the flexible wall(s) is/are minimum bent. Only one (side) wall or a few (side) walls or all (side) walls of the container may be flexible.

In a fourth preferred variation of compacting and fixing the at least one sorption bed, at least one fixing means comprises at least one rotating actor causing rotation of at least one container and of the sorption bed comprised therein, thereby permanently compacting and fixing the sorption bed. Due to the rotation a void is generated in the center of the at least one container. This void compensates for the volume change of the sorption bed. An inlet fluid port is axially located at the container delivering the fluid to the center of the container. The fluid then radially travels through the sorption bed and reaches at the periphery of the container. An outlet fluid port is provided at the outer wall of the container to allow the fluid to leave the container there. The container may preferably be a solid rotating column or drum having perforated walls. The column or drum accommodates the sorption material. By rotating the column or drum a cylindrical layer of sorption material forms the sorption bed by the action of a centripetal force. This force provides for compacting and fixing the sorption bed in the container. A pen stock may be axially arranged at the center of the column or drum and may deliver the fluid to the sorption bed. Rotation of the column or drum and of the sorption bed will also cause rotation of the fluid so that it will be pressed radially outwardly. As a corresponding radially outwardly directed force can be exerted to the fluid which may be considerably larger than the force of gravity, passing of the fluid through the sorption bed may considerably be accelerated as compared to the other variations described herein above. Furthermore, as the sorption bed is compacted in the radial outward direction, no detrimental voids are formed in this region thereby ensuring best efficiency of the recovering method.

Apart from compacting and fixing the at least one sorption bed in the at least one container, the volume of conducts and other receptacles used to transport and/or receive the fluid may be minimized to even more optimize efficiency of the device and method of recovering the recovering material. For this purpose any tubes are preferably sized to be as small as possible taking in mind that pressure loss is nevertheless kept low.

In a further preferred embodiment of the present invention the mass flow rate of passing the regenerant fluid through the sorption bed is selected to be small. More particularly, if the recovering fluid is passed through the at least one sorption bed in the loading step at a loading mass flow rate and if the regenerant fluid is passed through the at least one sorption bed in the regenerating step at a regenerating mass flow rate, the loading mass flow rate is larger than the regenerating mass flow rate. It has been found out that such selection further offers the advantage that concentration of the recovering material in the regenerant fluid can be increased thus optimizing efficiency of the method of the invention. In addition pressure loss in the sorption bed is minimized.

In order to minimize pressure loss across the sorption beds a plurality of such containers each containing one sorption bed may be connected in parallel. In order to compensate for possible differences in hydraulic resistance of the individual sorption beds connected in parallel, an additional sorption bed having an additional hydraulic resistance is provided which is for example 5 to 10 times larger compared to the individual hydraulic resistance of each single hydraulic resistance of the sorption beds. The additional resistance will be preferably connected in series with the containers connected in parallel. This additional resistance can be performed to be active just in one flow direction so that on both sides of the at least two containers such a unidirectional active hydraulic resistance can be installed. The additional resistance can be a single one that is connected to a common manifold of all containers or each single container will be connected to an individual additional hydraulic resistance. The differences of the individual fluid resistances of the sorption beds connected in parallel will then be largely compensated for.

Furthermore, in order to achieve the desired aspect ratio according to the present invention, a plurality of containers each one containing one sorption bed may be connected in series, the aspect ratio being calculated by adding the sorption beds of all containers connected in series and taking the sum obtained to determine the aspect ratio. Such distribution of one sorption bed to a plurality of containers connected in series may be advantageous if means for locking the sorption bed in position, in particular gravity weights, are used for compacting and fixing the sorption beds. Such advantage is believed to be due to the fact that the gravity weights in fact act over a limited height of the sorption bed only, depending on the type of sorption material, aspect ratio and a couple of further factors influencing the compacting and fixing effect. If relatively short sorption beds are used compacting and fixing efficiency is in such case better.

If one container with one sorption bed having a high aspect ratio is to be used, a plurality of locking means to fix and compact the sorption bed may be used in this sorption bed, the uppermost locking means being located at the upper boundary of the sorption bed and all further locking means being spacedly placed within the sorption bed one over the other. Thus, each one of the locking means may compact and fix a portion of the sorption bed being provided in a region just below this locking means. Such a serial arrangement can be achieved as well by a series of alternating compartments containing sorption material and locking material in one column.

Furthermore according to the present invention, if the recovering fluid is passed through the at least one sorption bed in the loading step in a loading direction and if the regenerant fluid is passed through the at least one sorption bed in the regenerating step in a regenerating direction, the loading and regenerating directions are opposite to each other, i.e., in a counter current flow. Again, this selection ensures even higher concentration of the recovering material in the regenerant fluid.

Furthermore according to the present invention, the regenerating direction is selected to be parallel to the direction of gravity and the loading direction is selected to be antiparallel to the direction of gravity. As regenerating direction is parallel to the direction of gravity, i.e., downwards, efficiency of recovering the recovering material is even more optimized. This effect may be due to the fact that regeneration using a weak acid cation exchange material leads to contraction of the sorption material and that by passing the regenerant fluid downwards, the sorption material located at the top layer of the sorption bed is consequently contracted first and contraction then proceeds successively downwards parallel with the regenerant fluid flow. This sequence of contraction of the sorption material in the sorption bed allows for more accurately compacting and fixing the bed, more particularly if the fixing means comprise a means for locking the sorption bed in position in the container, more especially a gravity weight means. If regenerant flow direction would be upstream, contraction would occur at the bottom of the bed first and would therefore require compaction of the bed in this region. This requirement is not easy to comply with.

Downward regenerating direction is preferred though it may to a lesser extent suffer from experiencing air pockets in the sorption bed, if the sorption bed has been emptied from liquid prior to regeneration, or from water pockets in the sorption bed, if the sorption bed has been flushed with water prior to regeneration. As a consequence thereof the regenerant fluid is prevented to some extent from uniformly passing through the sorption bed. But, it has been found out that this disadvantageous effect is negligible. The above benefits overwhelmingly override this less pronounced effect so that efficiency has proved to be excellent.

The following figures and examples explain the invention in more detail. These figures and examples exclusively serve the understanding and do not limit the scope of the invention as claimed.
- Fig. 1: shows a couple of embodiments of the compacting and fixing means according to the first variation of the invention;
- Fig. 2: shows a couple of embodiments of the compacting and fixing means according to the second variation of the invention;
- Fig. 3: shows a couple of embodiments of the compacting and fixing means according to the third variation of the invention;
- Fig. 4: shows an embodiment of the compacting and fixing means according to the fourth variation of the invention;
- Fig. 5: shows regenerating profiles in two graphs comparing two different resins in a column;
- Fig. 6: shows regenerating profiles in two graphs being obtained with two columns having different aspect ratios;
- Fig. 7: shows nickel recovery in two graphs comparing upstream and downstream regenerant flow; without any locking;
- Fig. 8: shows regenerating profiles in two graphs being obtained with a column having a sorption bed being fixed by a gravity weight placed on the sorption bed and with a column having no such gravity weight while up flow regenerating;
- Fig. 9: shows a regenerating profile in a graph at a sulfuric acid concentration of 3 mole / I and without air displacement;
- Fig. 10: shows a regenerating profile in a graph yielded with a resin bed accommodated in a flexible column
- Fig. 11: shows a regenerating profile in a graph yielded with a 1 mole / I sulfuric acid in a column;
- Fig. 12: shows regenerating profiles in two graphs being obtained with regenerant solutions passed through the sorption beds at different flow rates.

Elements having the same function are designated with the same reference signs in the figures.

The devices of the invention shown and explained herein may be part of a recovering arrangement, this arrangement comprising, in addition to the device of the invention, further devices, like an electrodialysis apparatus as described in EP 1 532 295 B1. This electrodialysis apparatus may for example be connected to an electroless metal plating device, an electroless nickel plating device for example. The recovering arrangement may further comprise further vessels and conduct means connecting the devices and vessels in an appropriate manner.

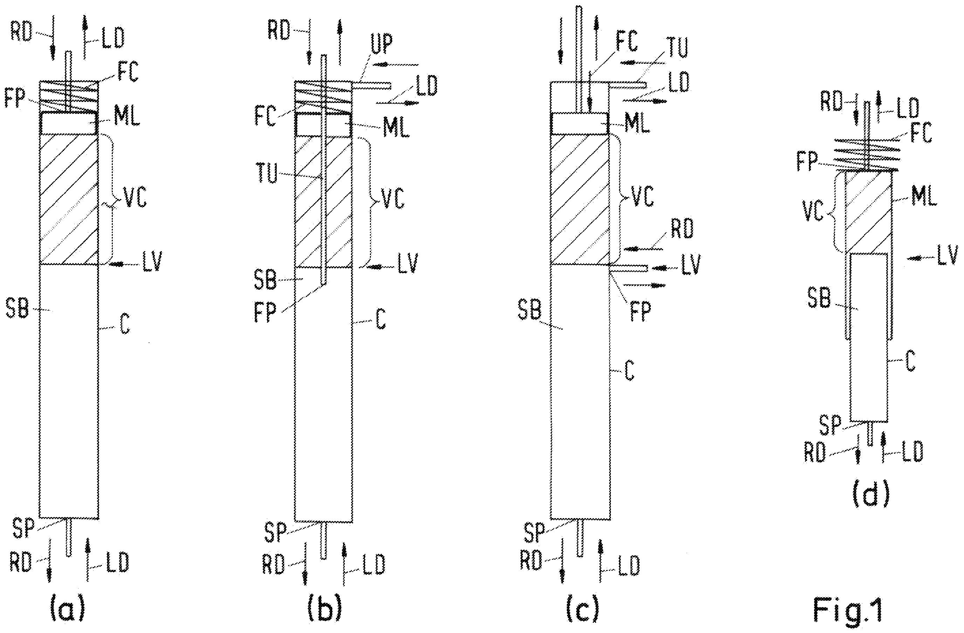

Fig. 1 shows a plurality of embodiments of the invention comprising a first variation of a means ML for fixing the at least one sorption bed SB to compensate for a volume change VC thereof.

The containers shown in Figs. 1(a), (b), (c), (d) are columns C which are filled with a sorption material, the column preferably being an inelastic column in these embodiments. The column C may be connected to a first vessel comprising an electrolyte containing metal ion species, namely nickel ion species, to be removed from the fluid, this fluid being a loading fluid, and to a second vessel comprising a fluid containing an acid for removing the metal ion species loaded to the sorption material forming the sorption bed SB in the column, this fluid being a regenerant fluid (not shown). In order to pass the loading fluid or the regenerant fluid through the column C, fluid ports are provided, a first fluid port FP being located at the upper face of the column C and a second fluid port SP at the lower face of the column C, wherein one fluid port is used to feed the fluid into the column C and the other one is used to remove the fluid from the column C once it has passed there through. To switch between the fluids, valves between the vessels and the column C may be provided. The first and second vessels may further be connected to other facilities, the first vessel to an electrodialysis arrangement for example to remove contaminants from a plating fluid and the second vessel to a reservoir containing regenerant fluid for example.

The sorption bed SB completely and voidlessly fills the column C but is subject to a volume change VC which occurs due to a loading and unloading actions performed on this material. In order to allow loading of metal ions to the sorption material, the sorption material is a weak acid cation exchange material. If the sorption material is a weak acid cation exchange material loading this material with metal ion species causes the ion exchange material to expand to almost completely fill the column C up to its upper face. Due to an unloading action which occurs when a regenerant fluid is passed through the cation exchange bed SB (in the regenerating step), the cation exchange material contracts and fills the column C to only about one half thereof up to the level indicated at LV. The ion exchange bed SB has in the loaded state a volume of about 180 % of that of the unloaded state, depending on the nature of the selected resin.

The loading fluid is a metal ion species containing liquid for example which may result from a chemical process wherein the fluid is a waste fluid. The metal ion species is to be loaded to the ion exchange material contained in the column C. Once the ion exchange bed SB has been loaded with the metal ion species, these species may be removed (unloaded) thereafter from the ion exchange material to be transferred into a regenerant fluid. For this purpose the regenerant fluid, an acid fluid for removing metal ion species from the weak acid cation exchange material for example, is passed through the column C and loaded to the regenerant fluid. The loading fluid is passed through the column C in an upward loading direction LD and the regenerant fluid is passed through the column C in a downward regenerating direction RD which is antiparallel to the loading direction LD.

The means ML for fixing the at least one sorption bed SB to compensate for a volume change VC may be realized in a variety of alternatives:
A first embodiment of this first variation of the means ML for fixing the at least one sorption bed SB to compensate for a volume change VC thereof shown in Fig. 1 (a) is a gravity weight which exactly fits into the column C. This gravity weight ML sits on the sorption bed SB and is simply separated by an inert packed bed which in turn is placed above the sorption bed SB. A force FC, the force of gravity in this case, is directed by the gravity weight ML downwards against the sorption bed SB. As the gravity weight ML exactly fits into the column C and may slide therein, sorption bed particles cannot enter into the gap between the gravity weight ML and the wall of the column C. Fluid entering or exiting at the gravity weight ML through the first fluid port FP may for example pass through one or more through holes provided in the gravity weight ML.

When the metal ion containing loading fluid is passed upwardly via the second fluid port SP into the column C, then through the sorption bed SB and finally out of it via the first fluid port FP, the sorption bed SB expands to attain the volume indicated in Fig. 1 (a) including the volume change VC so that the gravity weight ML is moved to the upper position as indicated in Fig 1 (a). After the sorption material has been loaded with the metal ion species it is rinsed and thereafter the metal ion species are unloaded from the sorption material by passing a regenerant fluid downwardly via the first fluid port FP into the column C, then by passing same through the sorption bed SB and finally out of it via the second fluid port SP. To this end, valves are provided to switch between passing the loading fluid upwardly through the column C and passing the regenerant fluid downwardly through the column C. Thus, the two fluids are passed through the column C at a counter current flow. Due to the action of the regenerant fluid unloading the metal ion species from the sorption material, the sorption material contracts by the volume change VC so that the sorption bed SB will attain an upper level indicated at LV. Therefore, the gravity weight ML moves from its upper position to a lower position which will be just above this upper level indicated at LV due to the force of gravity FC. The first fluid port FP moves down together with the gravity weight ML. As a consequence the interior volume available to the sorption bed SB will always be confined in a space defined between the gravity weight ML and a lower bottom plate. No detrimental void (freeboard) above the sorption bed SB will accordingly form so that dilution effects interfering with efficiency of the recovery method do not take place.

Figs. 1 (b) and 1 (c) show as alternative embodiments of the device of the invention another means ML for fixing the at least one sorption bed SB to compensate for a volume change VC thereof. This other fixing means is a piston ML which is axially moveable in the column C. The position of the piston ML shown in Figs. 1 (b) and 1 (c) is the upper position which it attains when the sorption bed SB is in its fully expanded state. The piston ML would be at a lower position (at about the level indicated at LV) if the sorption bed SB would be in its most contracted state.

In the embodiments shown in Figs. 1 (b) and 1 (c) the piston ML is subjected to an axially and downwardly acting force FC so that it may tightly follow the volume change VC of the sorption bed SB and may therefore permanently be placed directly on the surface of the sorption bed SB to prevent formation of any void above the sorption bed SB.

In the embodiment shown in Fig. 1 (b) the first fluid port FP is formed by the lower end of a tube TU mounted in the column C from the upper face thereof. This tube TU is provided to allow fluid to enter from above or to allow fluid to leave the sorption bed SB in an upward direction. This tube TU traverses the piston ML and is immerged into the sorption bed SB down to a level below that one which is indicated at LV so that its lower opening (first fluid port FP) is always immerged into the sorption bed SB, irrespective of the volume change VC of the sorption bed SB. The tube TU is unmoveably mounted to the column C and penetrates the piston ML through a through hole provided therein, so that the piston ML may slide along it as the piston ML moves up and down.

Loading fluid is passed through the sorption bed SB by passing the loading fluid via the second fluid port SP in an upward loading direction LD into the column C, through it and via an upper fluid port UP out of the column C. The regenerant fluid is passed in a counter current flow relative to the loading fluid through the sorption bed SB in a downward regenerating direction RD. It enters into the column C through the tube TU and enters the sorption bed SB via the first fluid port FP. It then traverses the sorption bed SB and leaves it via the second fluid port SP.

The sorption bed SB is permanently compacted by the piston ML so that no movement may occur in it due to the fluid passing through for example. Due to the placement of the first fluid port FP inside the sorption bed SB below the level indicated at LV the fluid passes through the sorption bed SB via a defined path length given by the distance between the first fluid port FP and the second fluid port SP.

Different to the device shown in Fig. 1 (b), the device shown in Fig. 1 (c) has a first fluid port FP being mounted in one side wall of the column C at a level below that one which is indicated at LV. Therefore, the first fluid port FP is always located in a region covered by the sorption bed SB.

Like in the device shown in Fig. 1 (b), loading fluid is passed in the device of Fig. 1 (c) through the column C in an upward direction by introducing it through the second fluid port SP into the column C, then passing it through the sorption bed SB and allowing it to leave the column C through a tube TU which is mounted to one of the side walls of the column C at its upper end. The regenerant fluid is introduced to the sorption bed SB via the first fluid port FP into the column C, then passes through the sorption bed SB and leaves the column C through the second fluid port SP.

Fig. 1 (d) shows another means ML for fixing the at least one sorption bed SB to compensate for a volume change VC as another alternative embodiment of the device of the invention. This fixing means ML comprises an upper part of a piston cylinder couple, wherein the upper part in this case is the cylinder ML embracing the column C, the latter forming a piston in this cylinder ML. The two parts ML, C are coupled together by fitting exactly, with a sliding gasket seal between the sliding surfaces (not shown) being provided to prevent fluid to pass to the outside. As the two parts ML, C slide in an axial direction relative to each other, the internal volume enclosed therein is variable. The sorption bed SB completely fills the internal volume of the container C. Due to a volume change VC of the sorption bed SB the piston ML moves up or down depending on the actual state of the sorption bed SB. A downward force FC acts on the piston ML to ensure compacting and fixing the sorption bed SB and that to ensure no void is formed in the column C.

A loading fluid is passed through the sorption bed SB in an upward loading direction LD by entering the column C through the second fluid port SP and leaving the column C through the first fluid port FP. The regenerant fluid is passed through the sorption bed SB in a downward regenerating direction RD by entering the column through the first fluid port FP and leaving the column C through the second fluid port FP.

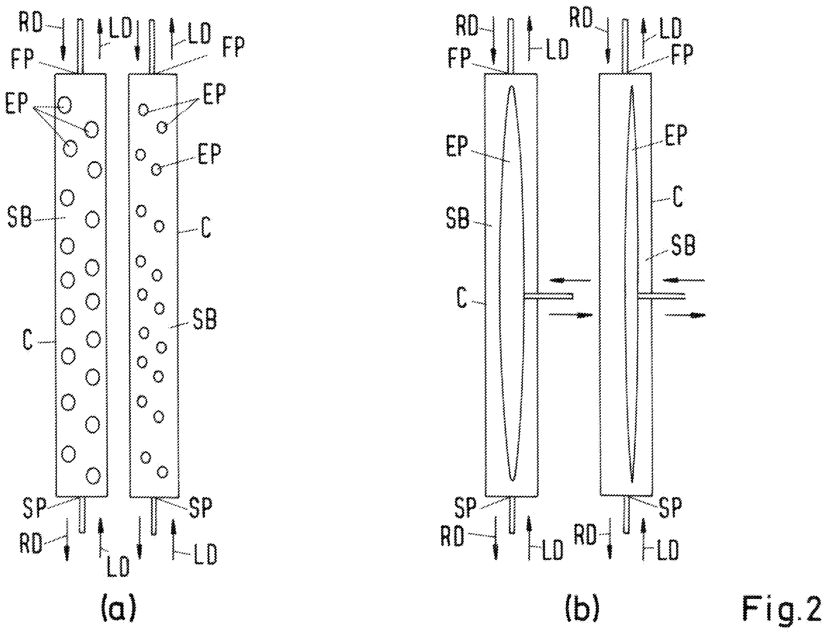

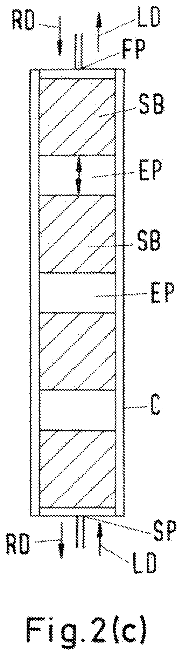

Fig. 2 shows embodiments of the invention comprising a second variation of a means EP for fixing the at least one sorption bed SB to compensate for a volume change VC thereof in a variety of alternatives:
The containers shown in Figs. 2(a), 2(b) and 2(c) are columns C which are filled with a sorption material, the columns preferably again being inelastic columns C in these embodiments. In addition to the sorption material, elastic packing elements EP are provided in the columns C. These elastic packing elements may for example be rubber balls EP (Fig. 2 (a)) which are compressible or for example be a hose EP made from an elastic material (Fig. 2 (b)). The internal space of the hose EP is connected to an external pressure measurement means to control the internal pressure therein. Furthermore, a gas reservoir can be provided to be connected to the internal volume of the hose EP. In the case of Fig. 2(c) the elastic material is formed in segments of the column which are axially spaced to each other and which each fill the cross section of the column C. As the internal volume of the column C is defined to be constant, the elastic packing elements EP are forced to change their size if the volume of the material of the sorption bed SB changes: If the sorption material expands the elastic packing elements EP are compressed (right hand side illustrations of Figs. 2 (a), (b)), and if the sorption material contracts the elastic packing elements EP are expanded due to an internal overpressure acting against the pressure executed by the sorption material thereupon (left hand side illustrations of Figs. 2 (a), (b)). The elastic packing elements EP therefore provide fixing means in the sense of the present invention thereby permanently ensuring that the sorption bed SB is constantly fixed in the column C and compacted therein. The elastic packing elements EP may furthermore be fixed in the column C to prevent any movement thereof, such as in the embodiment shown in Fig. 2 (c): In this case the elastic packing elements EP are fixed in the column to be located between parts of the sorption bed SB. In this case each elastic packing element EP compacts part of the sorption bed SB which is nearby the respective elastic packing element EP. This compensates for an eventual inhomogeneous contraction of the sorption bed SB thereby forming voids in the column. The fluid passing through the column is therefore not subject to any disturbance which might be caused by voids like the normally provided freeboard. Therefore, this variation of the means for fixing the at least one sorption bed SB is perfectly suited to compensate for the volume change VC of the sorption bed SB and consequently considerably enhances efficiency of the recovery method.

First and second fluid ports FP, SP are in these embodiments provided like in the columns C of Fig. 1. Likewise loading direction LD and regenerating direction RD are selected for the loading or regenerant fluid, respectively.

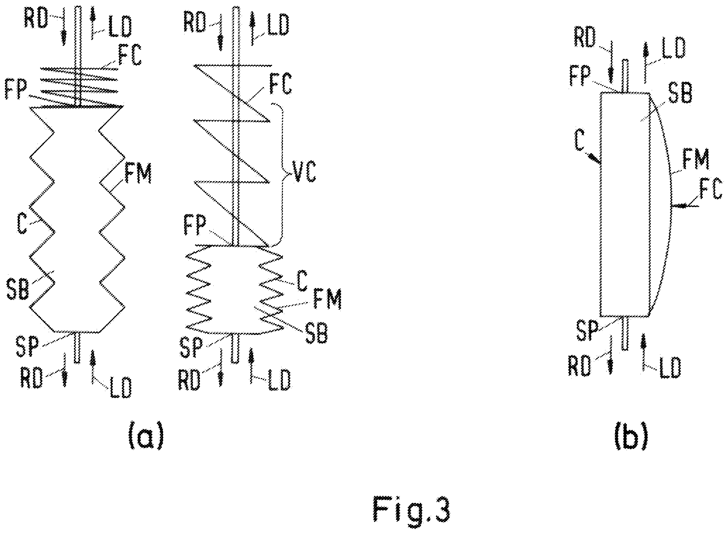

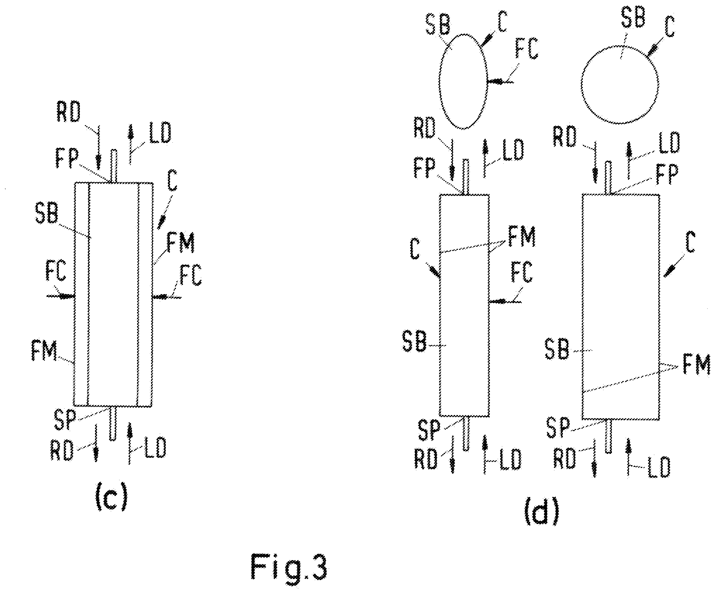

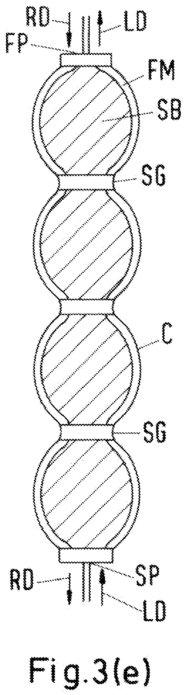

Fig. 3 shows embodiments of the invention comprising a third variation of a means FM for fixing the at least one sorption bed SB to compensate for a volume change VC thereof in a variety of alternatives:
In this variation the column C has a variable size and therefore variable volume. The volume of the column C varies as the volume of the sorption bed SB changes. In order to allow the size and volume of the column C to vary, at least part of the column C is made of a flexible material.

In a first embodiment of this variation the column C is formed by a bellows FM which is compressible in an axial direction (Fig. 3 (a)). If the sorption material expands the bellows FM elongates (left hand side of Fig. 3 (a)) and if the sorption material contracts the bellows FM shortens (right hand side of Fig. 3 (a)). Correspondingly, the internal volume of the bellows FM changes as the volume of the sorption bed SB changes so that no void is allowed to be generated therein. A force FC comprising an elastic force, such as a spring force or hydraulic or pneumatic force, or else comprising any other force generated by any mechanical means, like an actuator (servomotor), serves to track the displacement of the bellows length in accordance with the volume change VC of the sorption bed SB.

In a second embodiment of this variation the column C is formed by walls, one of them being a flexible membrane FM, made from FPM or silicone for example. Fig. 3 (b) shows such column C in a schematic illustration with one flexible membrane FM. This flexible membrane FM is in an expanded form as shown in Fig. 3 (b), as the sorption bed SB contained therein is expanded maximum. If the volume of the sorption bed SB contracts, this flexible membrane FM displaces to form a less ballooning side wall. The force FC applied to the flexible membrane FM may be at least partially be generated by the elastic tension formed in this flexible membrane FM and may in addition at least partially be generated by an additional external force FC, like the atmospheric pressure and/or by a mechanical means acting unidirectionally against the flexible membrane FM, a by press plate for example. Accordingly, there is again no void being formed in the column C, irrespective of the sorption bed SB being expanded or decreased in volume.

In a third embodiment of this variation the column C is formed by walls FM which are all flexible or wherein at least two of them are flexible, Fig. 3 (c). The column C may for example be a hose which is preferably made of FPM or silicone. Due to an expansion of the sorption bed SB contained in the column C, the internal volume of the column C increases so that the walls FM expand in an exterior direction. Due to a contraction of the sorption bed SB the walls contract in an inward direction. A uniform force FC acts on the walls, notably the flexible walls FM, of the column C. This force FC may be generated by the ambiance surrounding the column C having atmospheric pressure, so that there will always be a steady state regarding the internal pressure generated by the sorption bed SB and the external pressure generated by this uniform force. Part of the force FC directed inwardly may also be generated by the tension of the material of the flexible side walls as they are expanded. This uniform force may in an alternative be generated by a pressure reservoir other than the ambiance atmosphere. This alternative pressure reservoir may be realized by a vessel wherein the column C is immersed and which contains a fluid (liquid or gas) being subject to a defined pressure. This fluid also acts uniformly on the walls, notably the flexible walls FM, of the column C. Accordingly, there is again no void being formed in the column C, irrespective of the sorption bed SB being expanded or decreased in volume.

Further, in a fourth embodiment of this variation the column C is formed from a material which is flexible, *i.e.*, the walls FM are flexible, Fig. 3 (d). In this case, the external pressure is generated anisotropically by exerting a force FC from two opposing lateral sides onto the side walls of the column C. These side walls FM are again flexible. If the sorption material contracts the volume of the column C is allowed to decrease (left hand side of Fig. 3 (d)) and if the sorption material expands the volume of the column C is allowed to increase (right hand side of Fig. 3 (d)). Above the front elevations of the column C a respective cross section thereof illustrates contraction of the column to yield a deformed column C, which may be an ellipsoid (left hand side of Fig. 3(d)). This form may be attained by applying the force FC normal to the side walls FM unidirectionally from two opposing sides only, so that this deformation may take place.

In a further embodiment of this variation (Fig. 3 (e)) a column C having walls FM which are completely elastic in axially segmented portions, these portions FM being separated by rigid segments SG. As the sorption material forming the sorption bed SB expands in the column C the elastic walls portions FM expand while the segments SG do not change their shape. Due to this construction uneven expansion of the sorption bed SB may not occur because the force is exerted uniformly to the sorption bed SB.

First and second fluid ports FP, SP are in these embodiments provided like in the columns C of Figs. 1, 2. Likewise loading direction LD and regenerating direction RD are selected for the loading or regenerant fluid, respectively.

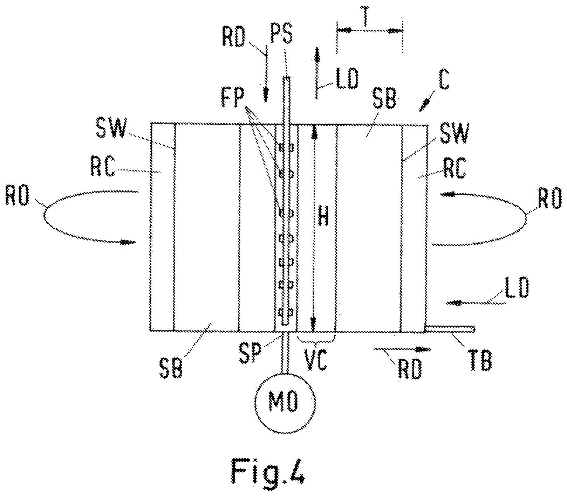

Fig. 4 shows a further embodiment of the invention comprising a fourth variation of a means MO for fixing the at least one sorption bed SB to compensate for a volume change VC thereof:
In this embodiment the container C is rotatable and rotated by a motor MO or other means to generate rotation RO of the container C. This container C is preferably rotation-symmetric to allow sorption material to be uniformly sedimented on the inner surface of the side wall SW thereof thereby forming a sorption bed SB in the form of a cylindrical layer. The device of the invention is in this case to be configured simply like a centrifuge. To allow fluid to pass through the side walls SW they are perforated, taking in mind that the perforations provided in the side walls SW are small enough to prevent any sorption material particles to be retained reliably. A pen stock PS which is located at the center of the container C and arranged axially therein serves to deliver the fluid to the container C such that it is uniformly spread along the axial length H thereof on the sedimented sorption bed SB. The pen stock PS has a plurality of fluid ports FP which are arranged at positions distributed in a region of 360° about the axial length H on the pen stock PS to deliver the fluid to all portions of the sorption bed SB uniformly. As the container C is subject to rotation RO and the sorption bed SB is formed by a centripetal force as a cylindrical layer on the inner surface of the side wall SW thereof, the fluid is forced under the action of rotation RO through the sorption bed SB and finally reaches at the inner surface of the side wall SW where it penetrates same through the perforations (fluid ports SP, not shown) therein to attain to receptacles RC surrounding the side walls SW. From there the fluid may leave the device via a conduct TB.

As the volume of the sorption material changes depending on the loading/unloading state thereof (volume change VC), the inner cylindrical surface thereof displaces accordingly so that there will be a central void if the sorption bed SB is contracted and there will be almost no void if the sorption bed SB is expanded. For fluid being delivered to the container C in a direction to flow from the pen stock PS through the sorption bed SB to the side wall SW and receptacle RC, this void is not problematic since it does not contribute substantially to dilution. As moreover, there is not formed any void in the region between the sorption bed SB and the side wall SW there will be no detrimental effect on dilution of recovering material contained in the fluid if it is passed through the container C in the direction indicated with RD.

In an alternative mode of operation, the fluid may fed in a direction LD to the receptacles RC via the conduct TB, pressed in an opposite direction through the sorption bed SB and leave the container C axially. In this case a void is generated on the exit side of the container C. If the loading fluid is however conveyed through the container C in this case, no efficiency loss is experienced. Therefore, to achieve maximum efficiency the loading fluid containing the recovering material is passed through the container C in the direction indicated by LD whereas the regenerant fluid is passed in a counter current flow to the loading fluid through the container C in the direction indicated by RD thereby not experiencing any void on the outlet side.

For the purpose of defining the aspect ratio of the sorption bed width to the sorption bed height as defined herein above, as the fluid passes through the sorption bed SB in a radial direction the sorption bed height is given by the thickness T of the cylindrical layer of the sorption bed SB and the sorption bed width is given by the length L if the container is a cylinder.

First and second fluid ports FP, SP are in these embodiments provided like in the columns C of Figs. 1, 2, 3. Likewise loading direction LD and regenerating direction RD are selected for the loading or regenerant fluid, respectively.

To show the superior efficiency achieved with the device and method of the invention the following experiments were performed:
A nickel sulfate containing solution obtained from an exhausted electroless nickel plating bath containing hypophosphite as a reducing agent was used as a fluid containing the nickel ions as the recovering material. The object of the trials was to evaluate the efficiency of transferring the nickel ions from an ion exchange material contained in an exchanger cylindrical column to an acid regenerant solution such that the nickel ion concentration therein is as high as possible and that acid concentration in this regenerant solution is as low as possible (pH as high as possible).

### Experimental Conditions:

A number of trials were performed under almost identical conditions:

| | |
|---|---|
| Resin: | Lewatit S8227 (Lewatit is a trade mark of Lanxess Deutschland GmbH) /weak acid cation exchange resin Diaion CR11 (Diaion is a trade mark of Mitsubishi Chemical Corp.) / weak acid cation exchange resin |
| Loading fluid: | 50...66 g Ni / l Ni-solution pH 4...4.6 |
| Loading fluid flow: | 9 BV with 10 BV / h for loading (excess for maximum loading) (BV: Bed Volume: volume of resin material after having been filled into the container, i.e., after regeneration; BV/h: flow rate in terms of bed volume) |
| Regenerate fluid: | 1 - 3 mole / l sulfuric acid |
| Temperature: | room temperature |

The columns were made from transparent PVC hose or tube or silicone hose. The columns were fed by a membrane dosing pump that could be adjusted by frequency and stroke. Different aspect ratios were realized by different diameters of the columns to get by with the same resin volume. The sorption bed aspect ratio AR of the sorption bed width to the sorption bed height was from 1:130 to 1:1, depending on the trial. The aspect ratio was determined always after fill in respectively regenerated form (H-form) after rinsing. In this status the resin is shrinked and has the smallest volume.

The columns indicated in Table 1 were used. One trial was performed with two columns having an AR = 22 in series.

**Table 1: Used Columns**

| Inner Diameter / mm | Material | Resin Vol / ml | AR | Remarks |
|---|---|---|---|---|
| 10(12) | Silicone | 130 | 137 (114) | Silicone tube was formed in helix form. Inner diameter expanded from 10 to 12 mm |
| 19 | PVC hose | 480 | 94 | |
| 25 | PVC hose | 480 | 40 | |
| 34 | PVC tube | 750 | 22 | Transparent PVC with gravity weight |
| 98 | PVC tube | 480 | 1 | Transparent PVC with gravity weight |

The gravity weight was a stainless steel cylinder having a weight of 330 g which slided in the column and sat at the sorption bed surface.

The resin was treated with the following standard procedure:

| | | |
|---|---|---|
| 1) | Acid treated: | 2 BV @ 3 BV/h |
| 2) | Rinsing: | 20 BV @ 10 BV/h |
| 3) | Conditioning with 5% NaOH : | 6 BV @ 10 BV/h |
| 4) | Rinsing: | 10 BV @ 10 BV/h |
| 5) | Loading: | 10 BV @ 10 BV/h |
| 6) | Rinsing: | 10 BV @ 10 BV/h |
| 7) | Regenerate: | 2,4 to 5,2 BV @ 1 BV/h |
| 8) | Rinsing: | 6 to11 BV @ 10 BV/h |

A couple parameters were varied for certain trials.

### Test Results and Discussion

### 1) Resin Type

Depending on the resin type, there is a huge difference in storage capacity and achievable concentration in the regenerate fluid. The Lewatit S8227 has much higher capacity compared to the resin Mitsubishi Diaion CR11.

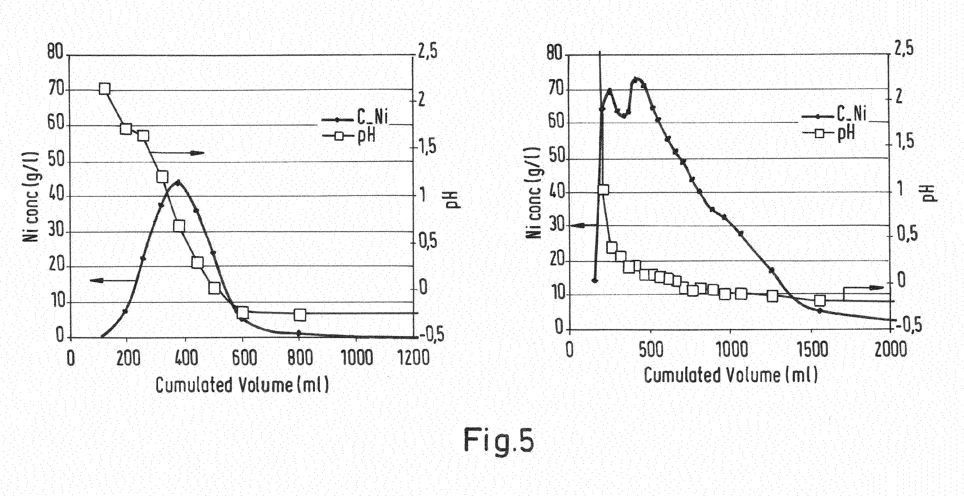

The graph shown in Fig. 5 shows a comparison of nickel recovery on Diaion CR11 (left) and on Lewatit S8227 (reight). AR was 40, regenerant fluid was 3 mole / l sulfuric acid.

Fig. 5 shows the momentary nickel ion and acid concentrations (pH) during the regenerating step, *i.e.*, as a function of the volume of sulfuric acid solution passed through the column. As a good efficiency of the regenerating step is defined to be achieved if a high nickel amount is eluted (unloaded) from the sorption bed while low cumulated volume of sulfuric acid is used, regeneration using the Lewatit S8227 resin proved to be superior to that of the Diaion CR11 resin because the absolute concentration of nickel ions proved to be higher with the Lewatit S8227 resin than with the Diaion CR11 resin and because the overall amount of nickel ions (integral/area under the curve) proved to be larger with the Lewatit S8227 resin than with the Diaion CR11 resin. In these cases regeneration was performed by passing the regenerant fluid in an upward direction through the column. A fixing means was not used. The resin bed was not perfectly fixed in the column.

The difference in results may be explained just by a 5 times higher capacity of the Lewatit S8227 resin (2 mole/l resin). Most of the further experiments were performed with the Lewatit resin due to its obviously better performance.

It was noticed that the Lewatit S8227 resin experienced a huge volume change depending on its state. This is the biggest disadvantage because it is not easy to fix the resin and to keep the freeboard constantly small during the operation. After regeneration the resin takes the smallest volume. The resin was measured to expand up to 178% (see Table 2).

**Table 2: Expansion of Lewatit S8227 resin**

| Regeneration Flow | Acid Concentration [mole/l] | Aspect Ratio AR | Low Height | High Height | Expansion Factor |
|---|---|---|---|---|---|
| ↓ | 3 | 1 | 9.5 | 16.5 | 1.74 |
| ↑ | 2.5 | 22 | 69.0 | 123.0 | 1.78 |
| ↑ | 3 | 22 | 77.0 | 122.0 | 1.58 |
| ↑w | 3 | 22 | 72.5 | 109.0 | 1.50 |
| ↓ | 3 | 40 | 77.0 | 119.0 | 1.55 |

A typical resin cycle is shown in Table 3.

**Table 3: Resin Process Cycle**

| | Pretreatment | Rinsing | Conditioning | Rinsing | Loading | Rinsing | Regenerating | Rinsing |
|---|---|---|---|---|---|---|---|---|
| Electrolyte | H₂SO₄ | DI water | NaOH solution | DI water | Electroless nickel | DI water | H₂SO₄ | DI water |
| Concentration | | | 5% | | 50.48 g/l | | 3 g/l | |
| pH start | | | | | 4.17 | | | |
| Total volume [ml] | 960 | 9800 | 3000 | 4900 | 4300 | 4900 | 2480 | 4900 |
| Flow rate [BV/h] | 3 | 10 | 10 | 10 | 4 | 10 | 1 | 10 |
| Flow direction | up | up | up | up | up | up | down | up |
| Resin height after step [cm] | 87 | 97 | 106 | 119 | 108 | 108 | 77 | 79 |

### 2) Effect of aspect ratio of sorption bed width to sorption bed height

The trial was performed with a 3 mole / l sulfuric acid.

Fig. 6 shows the results of two different experiments for the regenerating profile of pH and Ni-concentration obtained while the regenerant fluid passes through the sorption bed. A first experiment was performed using a first column having an AR=40 (left hand side graph) and a second column having an AR=1 (right hand side graph).

It is apparent that for AR=1 the utilization (efficiency) of the acid was much lower and that the resulting regenerate fluid contained nickel at a considerably lower concentration. Furthermore, the regenerant fluid contained more acid in the case of AR=1 than in the case of AR=40. A further consequence is a much higher required specific consumption of acid in case of AR=1 for regeneration step.

### 3) Fixation of bed

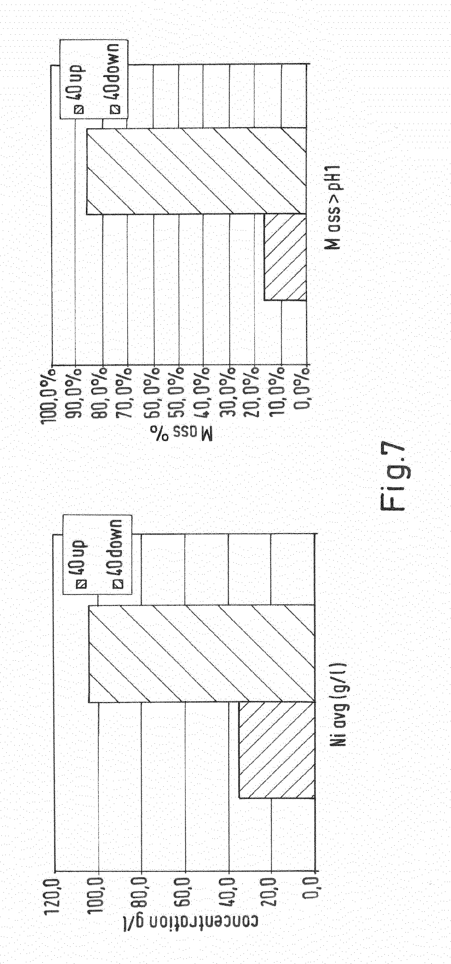

It has been found out that the fixation of the sorption bed has a huge influence on efficiency of the regenerating method. Fig. 7 shows the same trial at two different flow directions for the regenerant fluid. Aspect ratio of the column was 40. A 3 mole / I sulfuric acid was used as the regenerant fluid. All nickel regenerate fractions leaving the sorption bed which had a pH > 1 were collected. The concentration of nickel in the regenerant fluid obtained after upstream or downstream flow direction, respectively, was then measured. Fig. 7 shows the part of the nickel that can be separated at a pH > 1 (right hand side graph) and the average concentration (left hand side graph). The pH of the cumulated regenerate will be higher (about 2) but was not measured.

These results show that downstream regeneration gives always better results than upstream regeneration. The explanation for this is that, while upstream flow direction tends to move the sorption bed so that the fluid will be mixed up in the column so that efficiency of the regeneration will be deteriorated. This is due to the fact that a sharp boundary in the sorption bed cannot be achieved because a sharp boundary requires a fixed bed.

Therefore, a good way of achieving the bed being fixed is to regenerate the column in a downstream flow direction. A minor disadvantage of this approach is that it is difficult to push out air pockets that form in the sorption bed due to a displacement of rinse water with air prior to the regenerating step. There are some additional concerns like a negative influence of the density differences of different zones while regeneration that may lead to the so-called effect of "fingering". As a result, a suboptimal distribution of liquid will occur in both cases which decrease capacity and sharpness of concentration boundary in the column. Another disadvantage is that particles are easier to wash out by an upstream flow operation.

Nevertheless, the difference between upstream flow regeneration and downstream flow regeneration is impressive. Fig. 7 shows the effect for a column having AR=40 under the same conditions.

Further, according to the invention, a column and sorption bed design comprising a gravity weight on top of the sorption bed was created (see also Fig. 1 (a)). The gravity weight follows the expansion and contracting cycle of the bed while the sorption material is conditioned, loaded with nickel and regenerated with sulfuric acid.

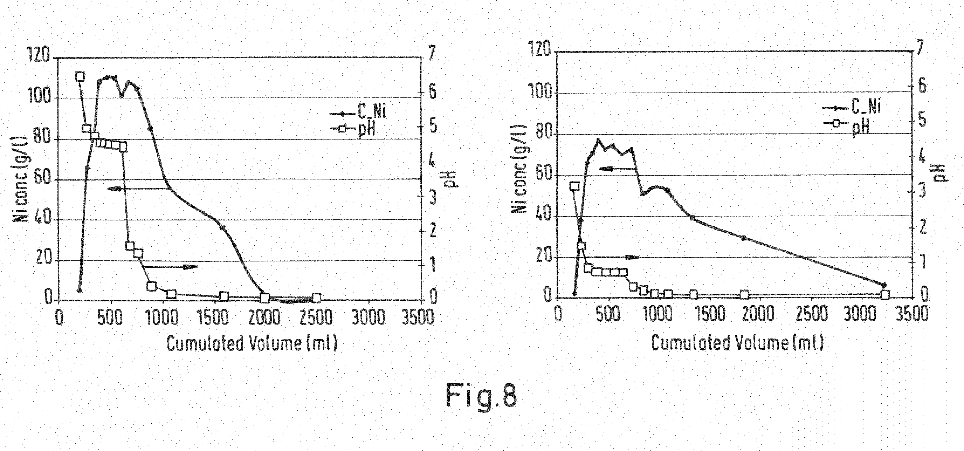

Fig. 8 shows graphs of the concentration profiles of nickel ions contained in the regenerant fluid which leaves the sorption bed after having been loaded with the nickel ions from the sorption bed using sulfuric acid as a function of the acid volume loaded to the sorption bed and of the pH gradient during elution (regeneration profile). Fig. 8 shows a comparison of regeneration profiles obtained with a gravity weight placed on the sorption bed (left hand side graph) and without such gravity weight (right hand side graph). In these experiments a column was used which had AR=22. Sulfuric acid concentration was 2.5 mole / I. Regeneration flow direction was upstream.

The weight had indeed a very positive effect (see Fig. 8): The nickel concentration achievable was much higher when the sorption bed was fixed by using the gravity weight (left hand side graph) than when the sorption bed was not fixed by such gravity weight (right hand side graph). Apart from this, with the sorption bed being fixed the acid concentration of the regenerant fluid leaving the column was, on an average, much less acidic than with the sorption bed not being fixed.

The results of recovered nickel at a pH > 1 were in these experiments with or without gravity weight, respectively, as follows:

| | |
|---|---|
| Fixation with gravity weight: | 68.5% of nickel recovered with an average concentration of 75.3 g Ni / l; |
| Without fixation with gravity weight: | 48.4% of nickel recovered with an average concentration of 24.0 g Ni / l. |

The fixing of the sorption bed using the gravity weight placed thereon resulted in a minimized freeboard (empty room on top of the resin). A small diameter hose connected downstream to the column to allow the regenerant fluid to leave the device further improved efficiency because any mixing of the regenerant leaving the column and occurring in such conduct means was thereby minimized.

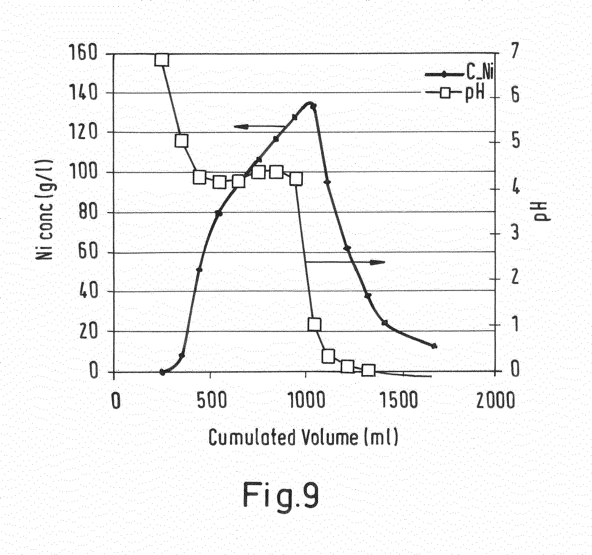

In a further trial (fixation of the sorption bed with a gravity weight, downstream regeneration, column having AR=22), the same column as in the experiment of Fig. 8 was used and a gravity weight placed on the sorption bed was provided. A sulfuric acid regenerant having a concentration of 3 mole acid / l was used. Without air displacement (displacing previously contained fluid in the column with the regenerant; air displacement: driving the fluid out of the column with air from above and allowing the fluid to leave the column at the bottom thereof) an even better result was achieved than before (Fig. 9):
In this case 89.6% of nickel was recovered with an average concentration of 69.3 g Ni / l. If the first two samples having low nickel concentration were skipped, the quality of the regenerant fluid obtained was even much better: In this case 88.7% of nickel was recovered with an average concentration of 96.2 g Ni / l.

The fractions of the regenerant fluid which had a pH >4 were collected and the nickel concentration therein was measured. The nickel yield being recovered was 61.0%, nickel having an average concentration of 95.8 g Ni / l.

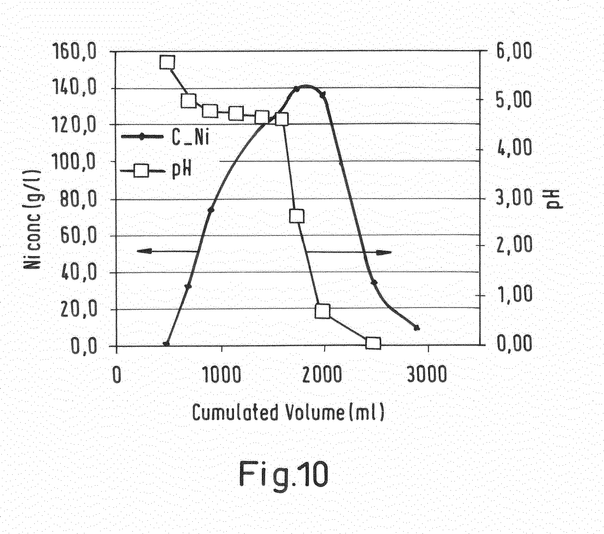

A further experiment was performed using a column having a flexible wall. The results are shown in Fig. 10. The column was of the type as shown in Fig. 3 (c). The column was formed from a silicone hose having fluid ports at the front ends. Lewatit S8227 resin was filled into the hose after regeneration so that no void was left in the hose. Then the fluid ports were formed. The resin bed in the hose had an aspect ratio of width to height of 29.3 mole / l sulfuric acid were used to deload nickel ions from the resin bed. The regeneration profile is very good as an extremely high concentration of nickel and large retention of acid were observed.

Further experiments were performed to analyze the individual parameters:

### 4) Influence of acid concentration

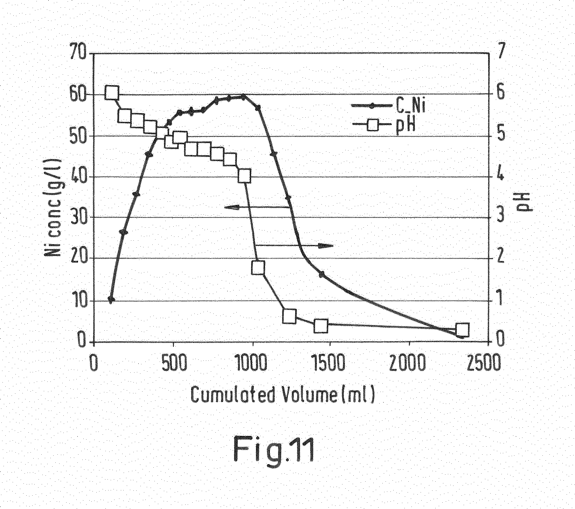

Trials were performed with 1, 2.5 and 3 mole / l sulfuric acid. A high acid concentration as a regenerant fluid lead to a high metal ion concentration, because each mole of sulfuric acid releases 1 mole of nickel ions, a higher concentration of sulfuric acid therefore releasing nickel at a higher concentration than a sulfuric acid solution having a smaller concentration. This is because 1 mole H₂SO₄ is able to unload 1 mole nickel ions at most from the sorption bed so that, theoretically, 58.7 g Ni / l cannot be exceeded in the regenerant fluid. On the other hand a favorable design of the column with the sorption bed contained therein which comprises fixation of the sorption bed is required to achieve high utilization of acid. This is a request for a low excess of acid and therefore for a relatively pure regenerate. In practice, even a fully charged acid / regenerate will be slightly acidic and the aforementioned maximum concentration will therefore be slightly lower unless retardation effects inside the sorption bed take place while regeneration causes local concentration peaks. An equilibrium between metal concentration and acid in the regenerant and resin will always form, this equilibrium being determined by an equilibrium constant. Therefore an access of acid cannot be avoided. With a column having AR=94, maximum possible concentration of nickel ions was achieved, see Fig. 11. Fig. 11 shows a graph of the regeneration profile of the regenerant fluid leaving the sorption bed using 1 mole / l sulfuric acid.

The maximum concentration of nickel ions in the regenerant fluid was found to be about 60 g/l. Acid retention (pH was kept at about 4.5) was until more than 50 % of the nickel ions were unloaded from the sorption material.

In order to increase nickel concentration in the regenerant fluid leaving the sorption bed, to about 90 to 100 g Ni / l for example, an about 2 molar sulfuric acid solution will be required in any case.

With a 3 molar sulfuric acid solution a concentration of 140 g Ni / l at most could be achieved by using a column having an AR=40.

### 5) Regeneration flow rate (BV/h)

Two trials were performed under almost the same conditions (using 2.5 mole / I sulfuric acid at 1 BV / h or using 3 mole / l sulfuric acid at 5 BV / h; AR=22). The quality of the trial with lower flow rate and lower acid concentration proved better although almost the same maximum concentration was achieved:
67.6% of nickel recovered with an average concentration of 96.2 g Ni / l;
48.4% of nickel recovered with an average concentration of 92.6 g Ni / l.

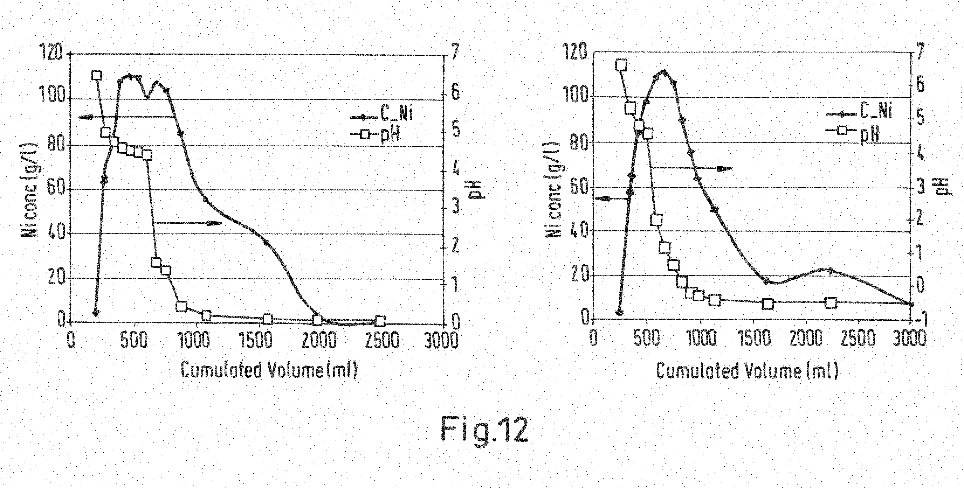

The regenerating profiles are shown in Fig. 12: The experiment was conducted at a flow rate of 1 BV / h (left graph) or 5 BV/h (right graph), respectively. In both cases the resin bed was fixed by placing a gravity weight thereon. Regenerant flow was in an upward direction. 2.2 mole Ni / I resin were unloaded in this operation in both cases. Accordingly, the integral (area under the nickel curve) was the same. In the experiment using 5 BV/h (right graph) pH decreased at a lower cumulated volume rate than in the experiment using 1 BV/h (right graph). This accounts for less separation efficiency of the resin bed. This difference may be due to the kinetics of the unloading operation and to an unfavorable flow profile formed in the resin bed when a higher flow rate is used (5 BV/h).

It therefore seems that the regeneration speed has a negative influence on quality.

## Claims

1. A method of recovering nickel ions from a nickel electroplating bath or an electroless nickel plating bath or a nickel rinse water containing the nickel ions, the method comprising:
a) loading the nickel ions, in a loading step, to at least one cation exchange material forming at least one sorption bed (SB) having a sorption bed volume which is comprised in at least one container (C) by bringing the nickel electroplating bath or electroless nickel plating bath or nickel rinse water containing the nickel ions into contact with the at least one cation exchange material, wherein said sorption bed (SB) has a sorption bed height and a sorption bed width, wherein an aspect ratio of said sorption bed width to said sorption bed height is at most 1:10; and
b) unloading the nickel ions, in a regenerating step, from the at least one cation exchange material ,to yield nickel regenerate fractions leaving the sorption bed (SB) and having a pH > 1, by bringing an acid as a regenerant fluid into contact with the at least one cation exchange material which is loaded with the nickel ions and loading the nickel ions to the acid, wherein the acid is passed through the at least one sorption bed (SB) in the regenerating step in a regenerating direction (RD), wherein the regenerating direction (RD) is a downward direction;
wherein the nickel electroplating bath or electroless nickel plating bath or nickel rinse water is passed through the at least one sorption bed (SB) in the loading step in a loading direction (LD) and the loading and regenerating directions are opposite to each other; and wherein the nickel electroplating bath or electroless nickel plating bath or nickel rinse water is passed through the at least one sorption bed (SB) in the loading step at a loading mass flow rate, wherein further the acid is passed through the at least one sorption bed (SB) in the regenerating step at a regenerating mass flow rate and wherein the loading mass flow rate is larger than the regenerating mass flow rate, and
wherein the loading mass flow rate is equal to or lower than 10 sorption bed volumes per hour.

2. The method according to claim 1, **characterized in that** the method comprises the further method step of fixing and compacting the at least one sorption bed (SB) to compensate for a volume change (VC) thereof.

3. The method according to claim 2, **characterized in that** the at least one container (C) is a column and has a locking means being freely moveable in the column in an axial direction.

## Patentansprüche

1. Verfahren zur Rückgewinnung von Nickelionen aus einem elektrochemischen Vernickelungsbad oder einem stromlosen chemischen Vernickelungsbad oder einem Nickelspülwasser, das die Nickelionen enthält, wobei das Verfahren umfasst:
a) in einem Beladungsschritt: Laden der Nickelionen auf mindestens ein Kationentauschermaterial, das mindestens ein Sorptionsbett (SB) mit einem Sorptionsbettvolumen bildet, das in mindestens einem Behälter (C) enthalten ist, durch Inkontaktbringen des elektrochemischen Vernickelungsbads oder des stromlosen chemischen Vernickelungsbads oder des Nickelspülwassers mit dem mindestens einen Kationentauschermaterial, wobei das Sorptionsbett (SB) eine Sorptionsbetthöhe und eine Sorptionsbettbreite aufweist, wobei ein Aspektverhältnis der Sorptionsbettbreite zur Sorptionsbetthöhe etwa 1:10 beträgt; und
b) in einem Regenerierungsschritt: Entladen der Nickelionen von dem mindestens einen Kationentauschermaterial, um Nickelregeneratfraktionen zu gewinnen, die das Sorptionsbett (SB) verlassen und die einen pH > 1 aufweisen, durch Inkontaktbringen einer Säure als Regenerierungsfluid mit dem mindestens einen Kationentauschermaterial, das mit den Nickelionen beladen ist, und Laden der Nickelionen in die Säure, wobei die Säure in dem Regenerierungsschritt in einer Regenerierungsrichtung (RD) durch das mindestens eine Sorptionsbett (SB) geleitet wird, wobei die Regenerierungsrichtung (RD) eine Abwärtsrichtung ist;
wobei das elektrochemische Vernickelungsbad oder das stromlose chemische Vernickelungsbad oder das Nickelspülwasser in dem Beladungsschritt in einer Beladungsrichtung (LD) durch das mindestens eine Sorptionsbett (SB) geleitet wird und die Beladungs- und die Regenerierungsrichtung einander entgegengesetzt sind; und wobei das elektrochemische Vernickelungsbad oder das stromlose chemische Vernickelungsbad oder das Nickelspülwasser in dem Beladungsschritt mit einer Beladungsmassenströmungsrate durch das mindestens eine Sorptionsbett geleitet wird, wobei ferner die Säure in dem Regenerierungsschritt bei einer Regenerierungsmassenströmungsrate durch das mindestens eine Sorptionsbett (SB) geleitet wird, und wobei die Beladungsmassenströmungsrate höher ist als die Regenerierungsmassenströmungsrate, und
wobei die Beladungsmassenströmungsrate 10 Sorptionsbettvolumina pro Stunde oder weniger beträgt.

2. Verfahren nach Anspruch 1, **dadurch gekennzeichnet, dass** das Verfahren den weiteren Verfahrensschritt des Fixierens und Verdichtens des mindestens einen Sorptionsbetts (SB) umfasst, um eine Volumenänderung (VC) desselben auszugleichen.

3. Verfahren nach Anspruch 2, **dadurch gekennzeichnet, dass** der mindestens eine Behälter (C) eine Säule ist und eine Sperreinrichtung aufweist, die in einer axialen Richtung frei in der Säule bewegbar ist.

## Revendications

1. Procédé de récupération d'ions nickel à partir d'un bain de nickelage électrolytique ou d'un bain de nickelage anélectrolytique ou d'une eau de rinçage au nickel contenant les ions nickel, le procédé comprenant :
a) la charge des ions nickel, dans une étape de charge, dans au moins un matériau d'échange de cations formant au moins un lit de sorption (SB) ayant un volume de lit de sorption qui est compris dans au moins un récipient (C) en mettant le bain de nickelage électrolytique ou le bain de nickelage anélectrolytique ou l'eau de rinçage au nickel contenant les ions nickel en contact avec l'au moins un matériau d'échange de cations, dans lequel ledit lit de sorption (SB) a une hauteur de lit de sorption et une largeur de lit de sorption, dans lequel un rapport d'aspect de ladite largeur de lit de sorption à ladite hauteur de lit de sorption est au maximum 1:10 ; et
b) la décharge des ions nickel, dans une étape de régénération, à partir de l'au moins un matériau d'échange de cations, pour produire des fractions de régénération de nickel quittant le lit de sorption (SB) et ayant un pH > 1, en mettant un acide comme un fluide régénérant en contact avec l'au moins un matériau d'échange de cations qui est chargé avec les ions nickel et en chargeant les ions nickel dans l'acide, dans lequel l'acide passe à travers l'au moins un lit de sorption (SB) dans l'étape de régénération dans une direction de régénération (RD), dans lequel la direction de régénération (RD) est une direction vers le bas ;
dans lequel le bain de nickelage électrolytique ou le bain de nickelage anélectrolytique ou l'eau de rinçage au nickel passe à travers l'au moins un lit de sorption (SB) dans l'étape de charge dans une direction de charge (LD) et les directions de charge et de régénération sont opposées l'une à l'autre ; et dans lequel le bain de nickelage électrolytique ou le bain de nickelage anélectrolytique ou l'eau de rinçage au nickel passe à travers l'au moins un lit de sorption (SB) dans l'étape de charge à un débit massique de charge, dans lequel en outre l'acide passe à travers l'au moins un lit de sorption (SB) dans l'étape de régénération à un débit massique de régénération et dans lequel le débit massique de charge est supérieur au débit massique de régénération, et
dans lequel le débit massique de charge est égal ou inférieur à 10 volumes de lit de sorption par heure.

2. Procédé selon la revendication 1, **caractérisé en ce que** le procédé comprend l'étape de procédé supplémentaire consistant à fixer et compacter l'au moins un lit de sorption (SB) pour compenser un changement de volume (VC) de celui-ci.

3. Procédé selon la revendication 2, **caractérisé en ce que** l'au moins un récipient (C) est une colonne et a un moyen de blocage qui est mobile librement dans la colonne dans une direction axiale.
